Europäisches Patentamt

**European Patent Office**

Office européen des brevets

(11) Numéro de publication: **0 165 185**

**A1**

(12) **DEMANDE DE BREVET EUROPEEN**

(21) Numéro de dépôt: **85420092.0**

(51) Int. Cl.⁴: **H 04 L 11/16**

(22) Date de dépôt: **15.05.85**

(30) Priorité: **22.05.84 FR 8408601**

(43) Date de publication de la demande:
**18.12.85 Bulletin 85/51**

(84) Etats contractants désignés:
**AT BE CH DE GB IT LI NL SE**

(71) Demandeur: **MERLIN GERIN**
**Rue Henri Tarze**
**F-38050 Grenoble Cedex(FR)**

(72) Inventeur: **Favier, Gérard**
**Merlin Gerin**
**F-38050 Grenoble Cedex(FR)**

(72) Inventeur: **Sanchis, Philippe**
**Merlin Gerin**
**F-38050 Grenoble Cedex(FR)**

(72) Inventeur: **Tirel, Bruno**
**50, Av. Jean Perrot**
**F-38100 Grenoble(FR)**

(72) Inventeur: **Woog, Alain**
**37, Bld. de Charonne**
**F-75011 Paris(FR)**

(72) Inventeur: **Dalle, Hervé**
**Framatome 1, Place de la Coupole**
**F-92084 Courbevoie(FR)**

(72) Inventeur: **Loubet, Jean**
**Framatome 1, Place de la Coupole**
**F-92084 Courbevoie(FR)**

(72) Inventeur: **Mauduit, Jean-Paul**
**Framatome 1, Place de la Coupole**
**F-92084 Courbevoie(FR)**

(74) Mandataire: **Kern, Paul et al,**
**Merlin Gerin Sce. Brevets 20, rue Henri Tarze**
**F-38050 Grenoble Cedex(FR)**

(54) **Procédé et système de transmission de messages entre plusieurs stations d'un réseau local industriel décentralisé à protocole d'accès déterministe par circulation de jeton.**

(57) Procédé et système d'échange de messages entre plusieurs stations interconnectées entre elle par un support commun ou média (12). Chaque station possède une adresse propre, et l'accès au média (12) est partagé entre les stations grâce à un protocole déterministe à circulation de jeton géré par un coupleur (CR1 ... CRn) associé à chaque station. Des moyens de mise en forme d'un signal collision assurent la détection de la duplication de jeton. Des moyens de détection d'un signal activité pemettent après l'écoulement de temps d'attente prédéterminés, de déterminer l'accusé de réception implicite du jeton, la perte de jeton et l'algorithme de régénération du jeton. le média (12) est formé par un câble double (lignes L1 et L2), et la redondance active est surveillée en permanence par chaque coupleur équipé d'un automate (42) de gestion comprenant un premier et un deuxième circuits (46, 48) d'élaboration de l'état de la voie (V1, V2) de communication et un circuit (50) de synthèse des états précédents et des signaux élémentaires d'activité et de collision des deux voies (V1, V2).

./...

Fig. 3

## PROCEDE ET SYSTEME DE TRANSMISSION DE MESSAGES ENTRE PLUSIEURS STATIONS D'UN RESEAU LOCAL INDUSTRIEL DECENTRALISE A PROTOCOLE D'ACCES DETERMINISTE PAR CIRCULATION DE JETON.

L'invention concerne un procédé et un système de transmission et d'échange de messages entre plusieurs stations interconnectées entre elles par un support commun de transmission ou média, et faisant partie d'un réseau local de communication décentralisé, l'accès au média étant partagé entre les différentes stations ayant chacune une adresse propre, grâce à un protocole déterministe à circulation de jeton, géré par un coupleur de contrôle de communication agencé dans chaque station. Le jeton est constitué par un message ou paquet particulier représentant un droit de parole qui circule sur le réseau suivant une table de configuration incluse en mémoire dans chaque coupleur. La station détentrice du jeton est la seule à pouvoir émettre un message ou paquet d'informations sur le média ayant de passer le jeton à la station suivante, chaque type de messages ou paquets contenant l'adresse de la station destinataire et l'adresse de la station source.

Contrairement à un réseau de communication centralisé, il n'y a pas de station pilote destinée à gérer le protocole d'accès au média des différentes stations. Le jeton circule sur le média, et donne selon un ordre déterminé le droit à émettre aux différentes stations. Cet ordre n'est pas nécessairement l'ordre suivant lequel les stations sont physiquement connectées au réseau, mais c'est un ordre logique.

Il existe plusieurs modes de contrôle de l'accès au média.

L'accès au média peut s'effectuer selon une technique d'attribution aléatoire normalisée sous le terme CSMA-CD dans laquelle chaque station peut revendiquer le droit de parole à tout instant. Le principe utilisé est le suivant: toute station qui désire émettre écoute ce qui se passe sur le média. Si elle n'entend rien, elle émet et compare ce qu'elle

entend à ce qu'elle émet. Si les deux diffèrent, c'est qu'une autre station s'est mise également à émettre. Il y a collision et chaque station émettrice ayant détecté la collision attend un délai aléatoire avant de recommencer à émettre.

L'accès au média peut s'opérer selon un deuxième mode déterministe explicite à circulation de jeton, lequel comporte l'adresse fonctionnelle de la station à laquelle le jeton sera alloué.

Le procédé et le système de transmission selon l'invention s'appliquent à ce deuxième mode déterministe, dans lequel la station détentrice du jeton est la seule à pouvoir émettre, avant de passer le jeton à la station suivante.

Selon un procédé déterministe explicite connu de l'art antérieur certains fonctionnements exceptionnels du protocole à circulation de jeton, notamment la régénération du jeton suite à une perte du jeton, sont soumis à la disponibilité d'une station prédéterminée qui serait "maître", toutes les autres stations étant "esclaves".

Le procédé selon la présente invention a pour but de remédier à cet inconvénient et consiste :
- à élaborer dans chaque coupleur un signal activité et un signal collision représentant l'état du média,
- à faire intervenir lesdits signaux activité et collision dans le protocole d'accès au média,
- à utiliser le signal collision pour détecter la duplication de jeton entraînant l'abandon du droit de parole des stations impliquées dans la collision,
- à utiliser le signal activité après l'écoulement de temps d'attente prédéterminés TACK, T perte, NBTS.TS ..., respectivement pour l'accusé de réception implicite du jeton, pour la détection de la perte du jeton, et pour l'algorithme de régénération du jeton.

L'utilisation des signaux activité et collision pour réaliser les différentes fonctions évoquées ne dépend pas de la disponibilité de telle ou telle station. La phase de régénération du jeton suite à une perte constitue ainsi une compétition entre la totalité des stations. Le procédé est indépendant de la nature du média, qu'il soit redondant ou non.

L'invention concerne également un système de transmission utilisant le protocole d'accès précité, chaque station comprenant un coupleur de contrôle de communication et un équipement utilisateur de traitement de l'information. Chaque coupleur comporte :

- une voie de communication formée par le média et un circuit de commande comprenant un transcepteur, un coprocesseur, une mémoire ou buffer d'émission/réception et un circuit de mise en forme agencé entre le coprocesseur et le transcepteur,

- un système à microprocesseur coopérant avec ladite voie pour gérer le protocole d'accès au média,

- une mémoire contenant une première table de configuration de la boucle logique du réseau,

- un circuit d'entrée/sortie communiquant avec l'équipement utilisateur correspondant,

- et un dispositif de bus de liaison.

Selon l'invention, chaque coupleur comprend de plus un circuit de contrôle équipé d'un contrôleur d'interruptions programmable coopérant avec le microprocesseur correspondant, et de moyens de temporisation formés par une pluralité de compteurs de temporisations différentes, correspondant respectivement auxdits temps d'attente T perte, NBTS.TS et TACK, le signal collision étant appliqué directement au contrôleur d'interruptions programmable, alors que le signal activité est délivré simultanément à chaque compteur comprenant une première liaison avec le microprocesseur, et une deuxième liaison avec le contrôleur.

Le premier compteur est agencé pour être réarmé automatiquement à sa valeur "T perte" par le signal activité, lequel est engendré par le coupleur correspondant dès le début d'activité du média, et pour délivrer un signal de commande de perte de jeton au contrôleur d'interruptions après l'expiration de la temporisation "T perte" sans activité sur le média, indiquant la perte de jeton pour la totalité des stations.

Le deuxième compteur est agencé pour être réarmé à sa valeur "NBTS.TS" par le microprocesseur dès la détection de la perte de jeton, et pour envoyer au contrôleur d'interruptions un signal de commande de gain de l'algorithme de régénération du jeton, après l'expiration de la temporisation "NBTS.TS" sans activité sur le média. Le coupleur ayant gagné la compétition passe immédiatement en phase d'émission se traduisant par un signal activité qui interrompt automatiquement le décomptage du deuxième compteur des autres coupleurs. La valeur TS est commune à toutes les stations. Le paramètre NBTS diffère d'une station à l'autre. Le troisième compteur d'une station source ou d'émission est agencé pour être réarmé à sa valeur "TACK" par le microprocesseur associé, après l'émission du jeton vers la station suivante de destination, le décomptage de la temporisation "TACK" étant automatiquement interrompu par la détection d'un signal activité à l'entrée du compteur de la station source, et pour délivrer au contrôleur d'interruptions un signal d'absence de réception de jeton après l'expiration de la temporisation "TACK" dudit compteur sans activité sur le média.

Dans le cas où le média est formé par un câble unique non redondant, chaque coupleur comporte une seule voie de com-

5

0165185

munication, et les signaux activité et collision sont élaborés dans le circuit de mise en forme agencé entre le coprocesseur et le transcepteur de la voie.

Dans le cas où les besoins en continuité de service et en sûreté sont primordiaux, la redondance active du média est nécessaire. Le média est alors formé par deux lignes distinctes, et le microprocesseur de chaque coupleur coopère avec deux voies de communication pour gérer le protocole d'accès au média. Les messages transitent simultanément sur les deux lignes. En cas d'incident sur une ligne, l'information circule toujours parfaitement. Une redondance passive qui utiliserait une ligne de secours pose le problème de la commutation. Elle résoud le problème des pannes franches, mais n'est pas apte à résoudre les problèmes posés par les aléas fugitifs.

La redondance active selon l'invention est surveillée en permanence par chaque coupleur équipé d'un automate de gestion comprenant :

- un premier circuit d'élaboration de l'état logique de la première voie,

- un deuxième circuit d'élaboration de l'état logique de la deuxième voie,

- et un circuit de synthèse des états précédents et des signaux élémentaires d'activité et de collision des deux voies, la sortie du circuit étant susceptible d'envoyer au circuit de contrôle un signal synthétique activité "ACT" et un signal synthétique collision "COL" représentatifs du média global.

Le circuit de synthèse est formé par un circuit logique agencé pour délivrer un signal activité "ACT" défini par une première équation logique $(aV1.V10K + aV2.V20K)$ et un signal collision "COL" défini par une deuxième équation logique $(cV1 + V1\overline{0K}).(cV2 + V2\overline{0K}).(V10K + V20K)$.

On remarque que si l'état d'une des deux voies est $\overline{OK}$, le contrôle d'accès ne se préoccupe pas d'elle pour tester l'activité ou pour détecter une collision sur le média.

D'autres avantages et caractéristiques ressortiront plus clairement de l'exposé qui va suivre d'un mode de réalisation de l'invention donné à titre d'exemple non limitatif et représenté aux dessins annexés, dans lesquels :

- la figure 1 montre une vue partielle de l'implantation physique d'un réseau local décentralisé de transport d'informations;

- la figure 2 représente la boucle logique du réseau;

- la figure 3 est un schéma synoptique d'un coupleur associé à un média redondant;

- la figure 4 est une vue détaillée de la fig. 3, montrant l'automate de gestion de la redondance;

- la figure 5 représente les différentes transitions d'état mis en oeuvre dans l'automate selon la fig. 4;

- les figures 6 et 7 représentent les circuits logiques équivalents correspondant aux signaux ACT et COL délivrés par l'automate;

- la figure 8 est une vue détaillée de la fig. 3 ou 4, montrant le circuit de contrôle du microprocesseur de chaque coupleur.

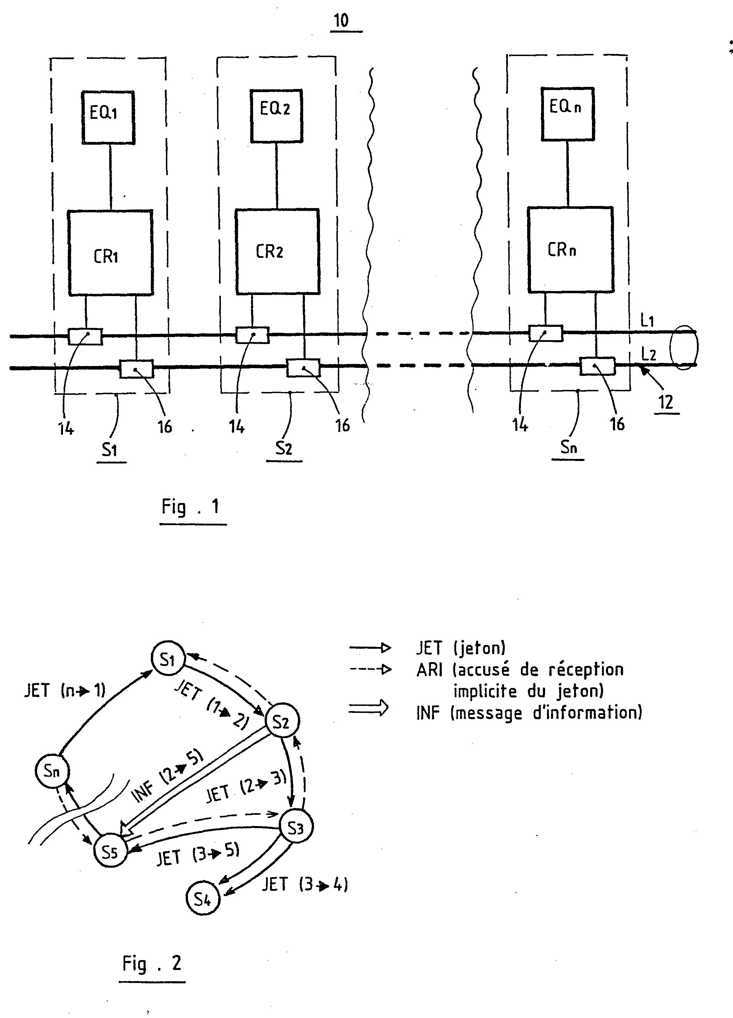

La figure 1 montre l'implantation physique d'un réseau local décentralisé de transport d'informations, composé d'une pluralité de stations S1, S2 ... Sn interconnectées en dérivation sur un support de communication commun ou média 12 à haute vitesse. Le média 12 est formé par un câble coaxial redondant à deux lignes L1, L2, modulé en bande de base à 10 M bits/seconde, et pouvant présenter une longueur de plusieurs centaines de mètres. La redondance du média 12 est transparente à l'utilisateur et active en permanence. L'ordre de succession des stations S1 à Sn le long du média 12 peut être quelconque.

Chaque station S1, S2 ... Sn comporte un coupleur CR1, CR2 ... CRn redondant de contrôle de communication, et un équipement EQ1, EQ2 ... EQn utilisateur de traitement de l'information formé par exemple par un mini-ordinateur ou un microprocesseur. Les différents coupleurs CR1, CR2 ... CRn du réseau 10 sont identiques, tandis que les équipements utilisateurs EQ1, EQ2 ...EQn présentent des structures hétérogènes. Chaque équipement EQ1, EQ2 ... EQn informatique est relié au coupleur associé CR1, CR2 ... CRn au moyen d'un interface standard (non représenté) comprenant une liaison série asynchrone ou synchrone.

Le coupleur CR1, CR2 ... CRn de contrôle de communication de chaque station S1, S2 ... Sn est équipé d'une paire de circuits 14, 16 d'injection et de prélèvement d'informations sur le média 12 redondant, chaque circuit 14, 16 individuel étant formé par un transmetteur/récepteur appelé par la suite "transcepteur". L'ensemble des transcepteurs 14 des différentes stations S1, S2 ... Sn sont reliés en série dans la ligne L1 du média 12. Il en est de même des transcepteurs 16 échelonnés à intervalles prédéterminés dans l'autre ligne L2.

Les différentes stations S1, S2 ... Sn communiquent entre elles au moyen des transcepteurs 14, 16 agencés tel que tout message émis par une station prédéterminée soit reçu simul-

tanément par toutes les autres stations, au délai de propagation près. L'accès au média 12 est partagé entre les différentes stations S1, S2 ... Sn grâce à un protocole déterministe à circulation de jeton. Une station et une seule possède à un instant donné le droit d'émettre. Elle envoie ses messages sur le média 12, puis passe le droit d'émettre à la station qui la suit dans une boucle logique dont fait partie chaque station. La transmission du jeton s'effectue de manière explicite par le coupleur de communication au moyen d'une trame particulière contenant l'adresse de la station à laquelle le jeton sera alloué. Ce procédé repose sur la circulation déterministe d'un droit de parole entre les différentes stations S1, S2 ... Sn, ayant chacune une adresse propre.

Le découpage du réseau local 10 en sept couches logicielles de différents niveaux est conforme à la structure du modèle normalisé OSI (Open System Interconnection) de l'ISO (International Standard Organization), tel que décrit dans l'article de Dr. Dorel DAMSKER, paru dans la revue "IEEE Transactions on Power Apparatus and Systems", Vol. PAS-102 No. 5, Mai 1983, pages 1202 à 1210.

Deux sortes de messages en paquets sont susceptibles de transiter sur le média 12 :

- les paquets d'informations (INF),
- les paquets de jetons (JET).

Chaque type de paquets contient un préambule à bits de contrôle, l'identificateur ou l'adresse de la station de destination et de la station source, un champ type contenant un code de fonction spécifique du type de message INF ou JET, d'éventuelles informations, et un code de redondance cyclique CRC destiné à détecter d'éventuelles erreurs de transmission.

| Préambule | Adresse Destination | Adresse Source | Type INF ou JET | éventuelles Informations | CRC |
|-----------|---------------------|----------------|-----------------|--------------------------|-----|

9 0165185

Une station qui détient le jeton a le devoir d'émettre un paquet d'informations (INF), et/ou de transmettre le jeton (JET) à une autre station. Une station qui ne possède pas le jeton doit détecter et reconnaître les messages circulant sur le média 12. Le nombre de paquets d'informations (INF) émis en une seule fois par une station est limité par un paramètre pour éviter de monopoliser le média 12. Après la séquence d'émission, la station passe le jeton à la station qui la suit dans la table de configuration du réseau 10. Cette table décrivant la boucle logique se trouve en mémoire dans chacun des coupleurs des stations S1, S2 ... Sn et est représentée à la figure 2, dans laquelle un message d'informations envoyé d'une station Si vers la station Sj sera noté INF (i → j), et un jeton échangé entre les mêmes stations portera la référence JET (i → j). A titre d'exemple, la station S2 émet un message d'information INF (2 → 5) vers la station S5 avant de transmettre le jeton JET (2 → 3) à la station S3 suivante. La réception d'un paquet quelconque est validée par le code de redondance cyclique CRC. La surveillance de la bonne réception des messages d'informations INF relève des couches supérieures, tandis que celle des paquets de jetons JET est opérée par le protocole décrit grâce à un système d'acquittement implicite faisant intervenir l'activité du média 12. La station ayant passé le jeton attend de voir une activité sur le média 12 interprêtée comme l'émission de la station suivante qui a donc bien reçu le droit de parole. Si un certain délai TACK, dénommé temps d'accusé de réception, s'écoule sans activité sur le média, un deuxième essai de passation du jeton peut être tenté vers la même station.

La figure 2 montre le cas d'indisponibilité de la station S4. Après avoir émis le jeton JET (3 → 4), la station S3 source se met à l'écoute de l'activité du média 12 après avoir armé préalablement un chien de garde dont la temporisation correspond au délai TACK d'accusé de réception. Le décomptage du temps TACK est automatiquement interrompu par la détection de l'activité. Par contre, lorsque le chien de

garde indique l'expiration du délai TACK sans activité, la
station S3 conclut que le paquet du jeton JET (3 → 4) a été
perdu et procède à un deuxième essai de passation du jeton
JET (3 → 4) vers la même station S4 et avec la même surveillance d'activité. En cas d'échec de ce deuxième essai,
la station S3 diagnostique l'indisponibilité de la station
S4, et tente de passer le droit de parole (voir (JET 3 → 5))
à la station S5 suivante. Lors de la prochaine période de
circulation du jeton, la station S3 essaiera de nouveau de
passer le jeton à la station S4 pour assurer sa réinsertion
dans la boucle.

Le principe du protocole à circulation de jeton prévoit
d'autre part deux types de fonctionnement exceptionnels :

- perte de jeton
- duplication de jeton.

PERTE ET REGENERATION DU JETON

Toutes les stations S1 à Sn sont à l'écoute en permanence
pour contrôler l'activité du média 12. Quand un temps trop
long s'est écoulé sans activité sur le média 12, le jeton
est diagnostiqué comme perdu par toutes les stations. Un tel
évènement peut se produire lorsqu'une station, possédant
le jeton à un instant prédéterminé, tombe en panne sans
avoir eu le temps d'effectuer le passage du jeton à la station suivante. Après détection de la perte du jeton par absence d'activité du média, la totalité des stations S1 à Sn
entrent en compétition pour régénérer le jeton. Une seule
station gagne ce droit, l'utilise et passe le nouveau jeton
à la station suivante. Le dispositif de régénération du
jeton sera décrit en détail par la suite.

DUPLICATION DU JETON

Deux ou plusieurs stations peuvent croire posséder le droit
de parole en même temps. Lorsque ces stations passent

ensemble en émission, les messages correspondant entrent en collision, entraînant une augmentation du niveau de tension sur le média 12. Les stations impliquées dans cette collision détectent la duplication du jeton. La totalité des stations S1 à Sn abandonne alors le droit d'émettre entraînant l'inactivité du média 12. L'ensemble du réseau 10 se trouve alors dans la phase de perte de jeton, telle que décrit précédemment.

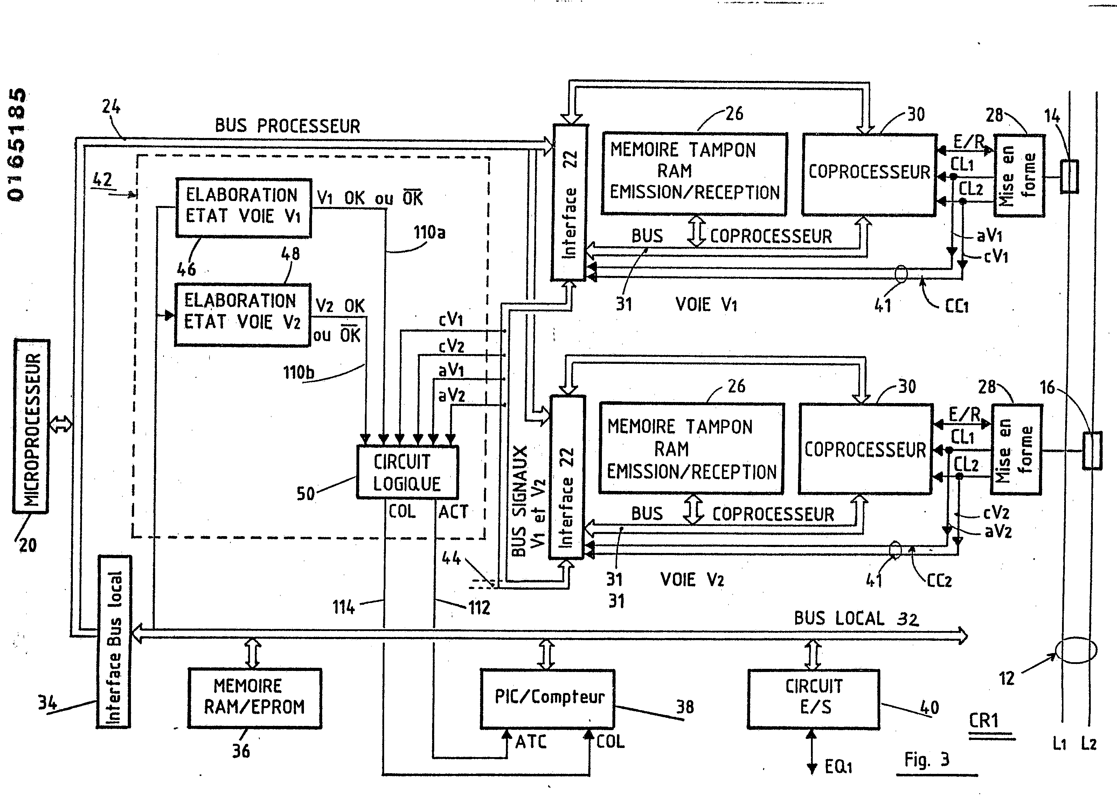

La figure 3 montre le schéma synoptique du coupleur CR1 de contrôle de communication de la station S1. Les autres coupleurs CR2 à CRn de structures identiques à CR1 ne seront pas décrits par la suite. A chaque ligne L1, L2 du média 12 redondant est associé un circuit de commande CC1, CC2 émission/réception, piloté par un système à microprocesseur 20 qui gère le protocole d'accès au média 12. Chaque circuit de commande CC1, CC2 comporte :

- un interface 22 de liaison avec le bus processeur 24 de communication avec le microprocesseur 20,

- une mémoire tampon RAM 26 ou buffer d'émission/réception,

- et un circuit de mise en forme 28 interconnecté entre le transcepteur 14, 16 associé et un coprocesseur 30.

L'ensemble constitué par le premier circuit de commande CC1, le transcepteur 14 et la ligne L1 forme la voie de communication V1 du média 12. Il en est de même du deuxième circuit de commande CC2, qui forme avec le transcepteur 16 et la ligne L2 la voie V2 de communication. L'interface 22, la mémoire tampon 26 et le coprocesseur 30 de chaque voie V1, V2 sont interconnectés au moyen d'un bus coprocesseur 31.

Chaque voie V1, V2 de communication est capable, en fonctionnement autonome, de :

- détecter l'activité du média 12 et les éventuelles collisions de paquets,

- de mettre en format les paquets en émission, avec notamment le positionnement du code de redondance cyclique CRC,

- de filtrer les paquets en réception selon l'adresse de destination,

- et de vérifier la validité d'un message reçu d'après le code de redondance cyclique CRC.

Les messages INF et JET à émettre sont chaînés dans la mémoire tampon d'émission 26 de chaque voie de communication V1, V2. Il en est de même des messages corrects reçus qui sont chaînés dans la mémoire tampon de réception 26 de chaque voie V1, V2. Un bus local 32 est connecté avec le bus processeur 24 du microprocesseur 20 par l'intermédiaire d'un interface 34. Le bus local 32 communique directement avec les circuits suivants du coupleur CR1 :

- une mémoire RAM/EEPROM 36 contenant une première table de configuration du réseau 10 (boucle logique décrite en référence à la fig. 2), et une deuxième table des messages reçus par voie V1, V2;

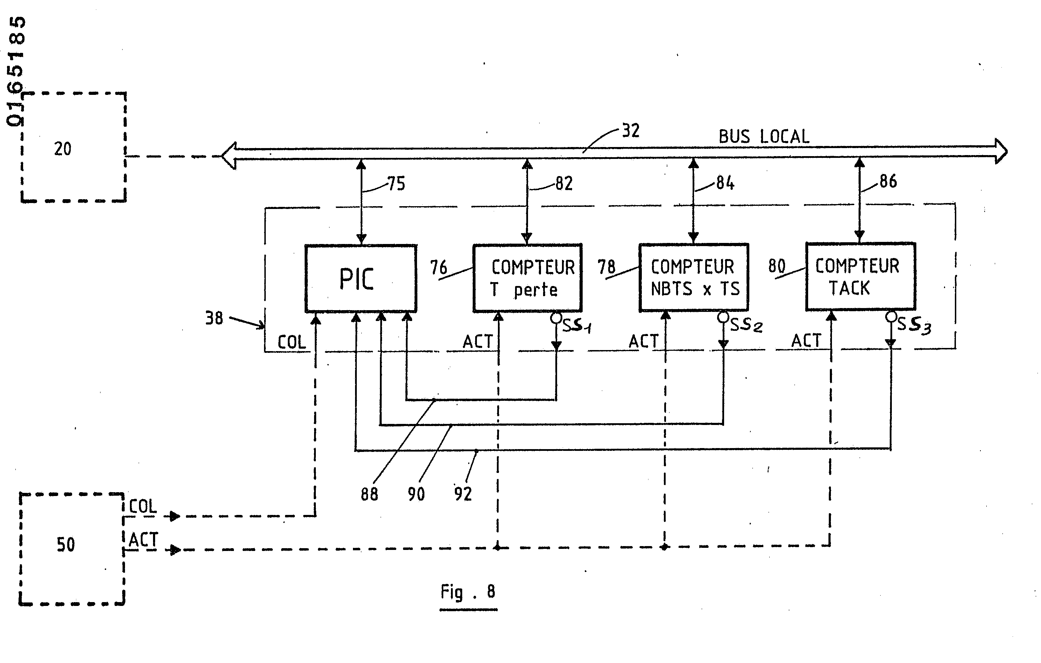

- un circuit de contrôle 38, décrit en détail par la suite en référence à la fig. 8, et comprenant un contrôleur d'interruptions programmable PIC, et des moyens de temporisation T formé par un système de compteurs;

- et un circuit E/S d'entrée/sortie 40 coopérant avec l'équipement utilisateur EQ1 de la station S1.

Certaines fonctions du coupleur CR1, représenté au schéma-bloc de la fig. 3, sont formées par des circuits spécifiques suivants :

| | | |
|---|---|---|
| Microprocesseur (20) | : | INTEL 8086 |
| Coprocesseur (30) | : | INTEL 82586 |
| Circuit de mise en forme (28) | : | INTEL 82501 |
| Transcepteurs (14, 16) | : | 3C100 de 3COM |
| Contrôleur d'interruptions programmable PIC (38) | : | INTEL 8259 |

Entre le coprocesseur 30 et le circuit de mise en forme 28 du circuit de commande CC1, CC2 de chaque voie V1, V2 est agencé un circuit de liaison comprenant :

- une première liaison CL1 de transport d'un signal d'activité mis en forme dans le circuit 28 correspondant; le signal activité de la voie V1 sera désigné par aV1 et celui de la voie V2 par aV2.

- une deuxième liaison CL2 de transport d'un signal collision mis en forme dans le circuit 28 correspondant de chaque voie V1, V2; le signal de collision de la voie V1 sera désigné par cV1 et celui de la voie V2 par cV2.

- et une troisième liaison E/R d'émission/réception des messages ou paquets INF et JET.

Sur chaque circuit de commande CC1, CC2, une paire de conducteurs 41 de dérivation prélèvent les signaux élémentaires d'activité aV1, aV2, et les signaux élémentaires de collision cV1, cV2 sur les première et deuxième liaisons CL1, CL2, et les appliquent à l'interface 22 correspondant. Un bus auxiliaire 44 relie les deux interfaces 22 des voies V1, V2 pour regrouper les quatre types de signaux élémentaires (aV1, cV1; aV2, cV2).

Lorsque la station S1 reçoit le droit de parole par l'une quelconque des lignes L1, L2, le coupleur CR1 commande le passage simultané en émission des deux voies V1, V2 de communication. Etant donné que les contenus des deux mémoires tampons 26 d'émission des circuits de commande CC1, CC2 sont identiques, le coupleur CR1 enverra à chaque émission deux versions du même message, appelées par la suite "doublons". La redondance des voies V1, V2 est active, car en dehors de tout mauvais fonctionnement, les doublons transitent effectivement sur les deux lignes L1, L2 du média 12. Les doublons portent un numéro de paire, qui associé à l'identificateur de la station source, permettra d'éliminer une des deux versions. Les deux voies V1, V2 de communication peuvent être qualifiées de "pseudo-synchrones". Même en présence d'une légère différence de phase (quelques nanosecondes) entre les deux voies V1, V2, l'émission des signaux ou tops de synchronisation par le microprocesseur 20, qui gère le protocole d'accès au média 12, permet d'affirmer que si deux paquets transitent en même temps sur les deux voies V1, V2, il s'agit bien de deux doublons. Si au cours d'une transmission, un message est pollué sur la ligne L1, la voie V1 correspondante l'invalide grâce au code de redondance cyclique CRC. Le doublon circulant sur la ligne L2 pourra être reçu par l'autre voie V2. De même, si à un instant donné, une des deux mémoires tampons 26 d'émission/réception est temporairement saturée, l'autre voie se charge naturellement de la réception. La redondance active remonte jusqu'aux mémoires-tampons 26, et permet de se prémunir des incidents fugitifs pouvant intervenir sur une voie de communication V1 ou V2.

## AUTOMATE DE GESTION DE LA REDONDANCE

La redondance est surveillée par un automate 42 (fig. 3) de gestion de l'état des deux voies V1, V2 de communication. L'automate est équipé d'un premier circuit 46 d'élaboration de l'état de la voie V1 et d'un deuxième circuit 48 d'élaboration de l'état de la voie V2. La sortie de chaque circuit 46, 48 se trouve soit dans un premier état OK correspondant à une voie V1 ou V2 correcte et en service, soit dans un deuxième état $\overline{OK}$ correspondant à une voie V1 ou V2 non correcte, quelle soit en service ou non. L'état $\overline{OK}$ de la voie V1 présume un fonctionnement douteux de la ligne L1 ou de l'un des circuits 26, 28, 30. L'indication de l'état V1 OK à la sortie du circuit 46 signifie un état correct de la voie V1. Cet état est représenté par exemple par un niveau logique haut (1). L'indication de l'état V1 $\overline{OK}$ à la sortie du circuit 46 signifie un état incorrect de la voie V1. Cet état correspond à un niveau logique bas (0). Il en est de même pour les états V2 OK et V2 $\overline{OK}$ à la sortie du circuit 48 associé à la voie V2.

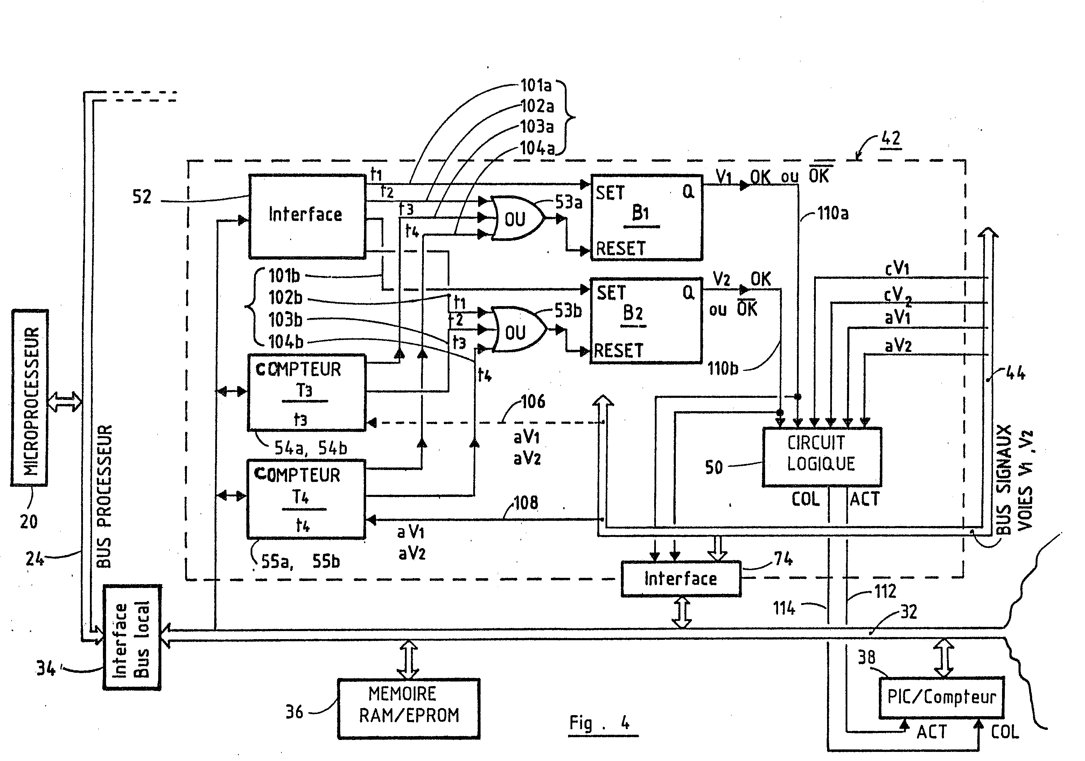

Sur la figure 4, les circuits 46, 48 d'élaboration de l'état des voies V1, V2 sont identiques et comportent chacun une bascule bistable B1, B2 à deux entrées SET et RESET et à une sortie Q. L'entrée SET de chaque bascule B1, B2 est connectée électriquement par un conducteur 101a, 101b à un interface 52 de communication avec le bus local 32. L'autre entrée RESET est reliée à la sortie d'une porte logique OU 53a, 53b, équipée de trois entrées. La première entrée de chaque porte logique OU 53a, 53b est branchée à l'interface 52 par un conducteur 102a, 102b. A chaque voie V1, V2 sont associés :

- un compteur 54a, 54b de temporisation T 3 qui pilote la deuxième entrée par des conducteurs 103a, 103b;

- un autre compteur 55a, 55b de temporisation T 4 qui commande la troisième entrée de chaque porte OU 53a, 53b par l'intermédiaire des conducteurs 104a, 104b.

Les compteurs 54a, 54b, 55a, 55b communiquent d'une part avec le bus local 32 et d'autre part avec le bus auxiliaire 44 par des liaisons 106, 108.

Le premier circuit 46 d'élaboration de l'état de la voie V1

est formé par la bascule B1, la porte OU 53a, l'interface 52 commun, un compteur 54a et un compteur 55a.

Le deuxième circuit 48 d'élaboration de l'état de la voie V2 comporte la bascule B2, la porte OU 53b, l'interface 52 commun, un compteur 54b et un compteur 55b.

L'application d'une impulsion de commande sur l'entrée SET de chaque bascule bistable B1, B2 met la sortie Q correspondante à l'état OK (niveau logique 1).

A l'inverse, l'application d'une impulsion de commande sur l'entrée RESET de chaque bascule bistable B1, B2 met la sortie Q à l'état $\overline{OK}$ (niveau logique 0).

Seul le fonctionnement du premier circuit 46 de la voie V1 sera décrit en détail par la suite, celui du circuit 48 de la voie V2 étant identique :

Elaboration_de_l'état_de_la_voie_V1_de_communication_(fig._3 et_4)

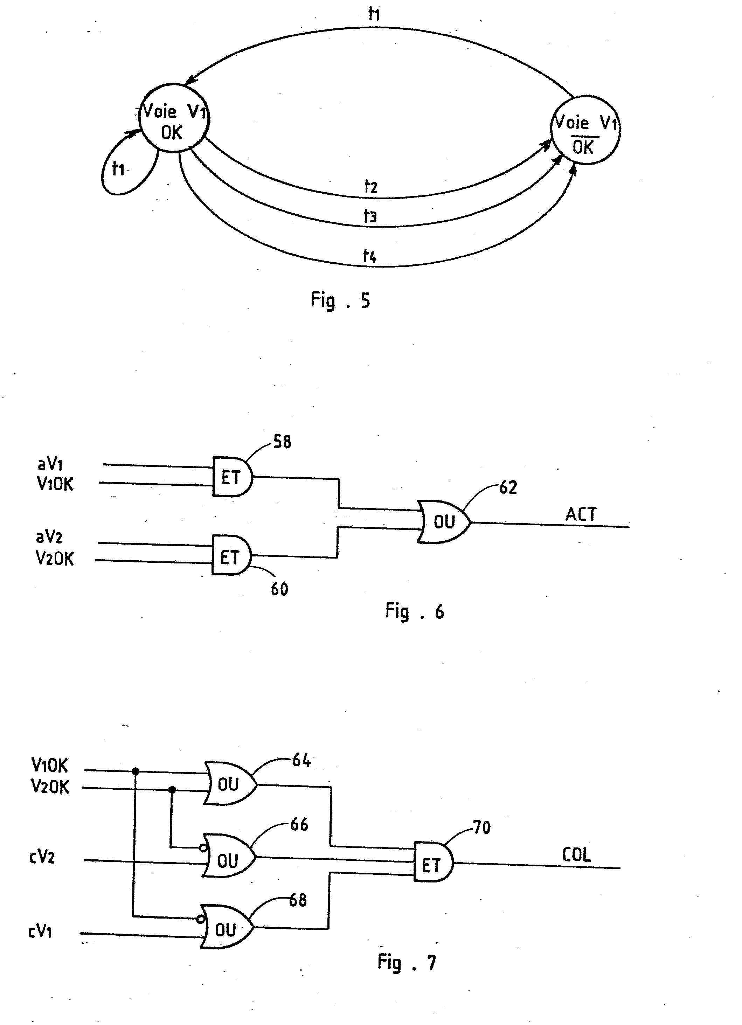

Pour que l'état de la voie V1 soit modifié, il faut qu'un évènement active une transition. On distingue sur la figure 5 quatre sortes de transitions t1, t2, t3 et t4; seule la première transition t1 fait passer l'état de la voie V1 de $\overline{OK}$ à OK, les autres transitions t2, t3 et t4 provoquant le passage inverse de l'état de la voie V1 de OK à $\overline{OK}$.

Transition_t1_: Un message INF ou JET reçu correctement positionne l'état de la voie V1 dans le premier état OK. Cette transition t1 est logicielle et intervient de la manière suivante : lorsque le message INF ou JET reçu par la voie V1 possède un code de redondance cyclique CRC correct, le coprocesseur 30 de la voie V1 correspondante signale la réception de ce message au microprocesseur 20. Ce dernier met la sortie Q de la bascule B1 dans le premier état OK grâce à l'impulsion de commande appliquée à l'entrée SET par le

conducteur 101a. Lorsque la transition t1 est activée dans l'état OK de la voie V1, cet état reste alors inchangé.

Transition_t2_: Lorsque la voie V1 n'a pas reçu, et ne peut plus recevoir un message que l'autre voie V2 a reçu correctement, son état passe à $\overline{OK}$. D'après la description précédenté concernant la pseudo-synchronisation des deux voies V1, V2, chaque message est transmis sous la forme de deux doublons qui transitent sur les deux lignes L1, L2 avec un léger déphasage. Si la voie V1 reçoit son doublon avant que la voie V2 reçoive le sien, l'état de la voie V1 reste OK. Réciproquement, si la station V2 reçoit son doublon avant la station V1, cette dernière reste en attente du sien pendant un temps prédéterminé qui est supérieur au déphasage maximum entre les deux voies V1, V2 pseudo-synchrones. Si la voie V1 n'a toujours pas reçu son doublon à l'expiration de ce temps, son état passe alors à $\overline{OK}$. La surveillance de réception des doublons est opérée de la manière suivante :

Selon un premier mode de réalisation, l'automate 42 arme un compteur (non représenté sur la fig. 4) après réception du doublon de la voie V2. Ce compteur est constitué par un chien de garde dont la temporisation correspond à la valeur maximum du déphasage entre les deux voies V1, V2. A l'expiration de cette temporisation du compteur, si la voie V1 n'a toujours pas reçu son doublon, son état passe à $\overline{OK}$.

Le principe utilisé dans un deuxième mode de réalisation est basé sur la constatation que la voie V2 ne peut pas recevoir de nouveau message entre la réception d'un doublon et la réception du doublon correspondant sur l'autre voie V1. Dans le cas où la voie V2 reçoit deux messages consécutifs sans que la voie V1 n'ai reçu la version du premier message, l'état de la voie V1 passe à $\overline{OK}$. L'automate 42 tient à jour la deuxième table contenue dans la mémoire 36 et reproduisant les dernières réceptions des deux voies V1, V2. Cette deuxième table de la mémoire 36 est du type suivant :

| Identificateur du dernier paquet | Voie V1 | Voie V2 |
|---|---|---|
| | reçu | en attente |

<u>La réception d'un message ou paquet sur la voie V2</u>
a, compte tenu des transitions t1 et t2, des conséquences,
qui dépendent de l'état de la deuxième table de la mémoire
36 :

<u>1)</u> Si le contenu de ladite table était :

| Identificateur du dernier paquet | Voie V1 | Voie V2 |
|---|---|---|
| | reçu | reçu |

Le contenu de la table devient après réception d'un paquet
ou message sur la voie V2 :

| Identificateur du dernier paquet | Voie V1 | Voie V2 |
|---|---|---|
| | en attente | reçu |

et la sortie Q de la bascule B2 du circuit 48 représentant
l'état de la voie V2 passe ou reste OK.

<u>2)</u> Si le contenu de la table était :

| Identificateur du dernier paquet | Voie V1 | Voie V2 |
|---|---|---|
| | en attente | reçu |

La table devient :

| | Voie V1 | Voie V2 |
|---|---|---|
| Identificateur du précédent paquet | non reçu | reçu |
| Identificateur du dernier paquet | en attente | reçu |

et l'état de la voie V1 (sortie Q de la bascule B1 du circuit 46) passe à $\overline{OK}$.

<u>3)</u> Si le contenu de la table était :

| Identificateur du dernier paquet | Voie V1 | Voie V2 |
|---|---|---|
| | reçu | en attente |

alors deux cas peuvent se présenter :
a. Si le message reçu par la voie V2 est celui attendu, c'est-à-dire correspondant à l'identificateur du dernier
message reçu; la table devient :

|  | Voie V1 | Voie V2 |
| --- | --- | --- |
| Identificateur du dernier paquet | reçu | reçu |

et l'état de la sortie Q de la bascule B2 du circuit 48
correspondant à l'état de la voie V2 passe ou reste OK.

b. Si le message reçu par la voie V2 est différent de celui
attendu, alors l'état de la voie V2 devrait passer à $\overline{OK}$.
La voie V2 repasse néanmoins à OK, car elle vient de recevoir un message correct (voir transition t1 précédente).
Cette transition t1 est alors considérée comme prioritaire,
et l'état de la voie V2 passe ou reste OK. La table devient:

|  | Voie V1 | Voie V2 |
| --- | --- | --- |
| Identificateur du dernier paquet | en attente | reçu |

Cette transition t2 est logicielle grâce au microprocesseur
20, qui lit dans l'en-tête de chaque nouveau message INF ou
JET reçu l'identificateur de la station source ainsi que le
numéro du doublon dans le champ type. Le microprocesseur 20
vérifie ainsi qu'aucun message n'a été reçu sur la voie V1
qui n'ait pas également été reçu sur la voie V2. En cas de
non concordance, le microprocesseur 20 positionne la sortie
Q de la bascule B2 du circuit 48 dans l'état $\overline{OK}$ grâce à
l'impulsion de commande délivrée par l'interface 52 sur le
conducteur 102b. L'adoption de cette deuxième méthode de
surveillance pour la transition t2 permet de réaliser dans
le même traitement la surveillance et l'élimination des
doublons, de manière à ne présenter qu'une version de
chaque message aux couches supérieures.

Transition_t3_: L'état de la voie V1, qui ne reçoit pas de
paquets pendant une période plus longue que la temporisation T 3 du compteur 54a, est considéré $\overline{OK}$. La valeur de
la temporisation T3 est ajustable en fonction de la fréquence des paquets que la station S1 doit recevoir. T3 sera
au plus égale à deux temps de circulation du jeton. Lorsque

le contrôleur d'interruptions programmable PIC envoie au microprocesseur 20 une interruption correspondant à une bonne réception sur la voie V1, le compteur 54a est automatiquement réinitialisé à la valeur T3. Le compteur 54a décompte ensuite jusqu'à la prochaine bonne réception d'un paquet sur la voie V1 qui doit impérativement intervenir avant l'expiration de la temporisation T3. Dans le cas contraire, le passage à zéro du compteur 54a provoque l'emission d'une impulsion de commande dans le conducteur 103a qui positionne la sortie Q de la bascule B1 dans l'état $\overline{OK}$. La liaison 106 entre le bus auxiliaire 44 et les compteurs 54a, 54b est superflue.

Une variante de mise en oeuvre de la transition t3 peut également utiliser l'inactivité de la voie V1 pendant un temps supérieur à T3. Dans ce cas, la liaison 106 (en pointillé) est nécessaire pour prélever les signaux activités aV1 et aV2 des voies V1 et V2. Chaque nouvelle activité de la voie V1 se traduit pas la présence d'un signal activité aV1 sur la liaison 106, qui provoque le réarmement du compteur 54a à la valeur T3. Dès que l'activité cesse, et pendant toute la durée de l'inactivité, le compteur 54a décompte. En cas d'expiration de la temporisation T3 sans activité sur la voie V1, l'état de la bascule B1 passe à $\overline{OK}$, tel que décrit précédemment. Dans ce cas, la valeur de T3 est à ajuster en fonction de l'inactivité maximale acceptable qui est en général le temps de résolution de l'algorithme de régénération du eton. Cette variante de la transition t3 est purement matérielle.

Transition t4 : L'état d'une voie V1, V2 active trop longtemps passe à $\overline{OK}$. Cette transition t4 relève du même principe que celui de la variante précédente de la transition t3, et repose sur le fait que l'automate 42 de surveillance teste en permanence l'activité de chaque voie V1, V2. Le passage de la voie V1 d'active à inactive entraîne la disparition du signal activité aV1 dans la liaison 108, et le réarmement du compteur 55a à la valeur T4. Dès que l'activité

reprend sur la voie V1 et pendant toute sa durée, le compteur 55a décompte. S'il arrive à expiration de la temporisation T4, le compteur 55a envoie une impulsion de commande dans le conducteur 104a, qui commute la bascule B1 dans l'état $\overline{OK}$. La valeur de T4 est à paramétrer en fonction de l'activité maximale acceptable qui correspond à la durée de transmission du paquet le plus long.

Elaboration_des_signaux_synthétiques_ACT_(activité)_et_COL (collision)_du_média_12.

Dans le protocole à circulation de jeton décrit en référence aux fig. 1 et 2, le contrôle d'accès nécessite la connaissance des notions d'activité du média et de collision sur le média. Comme le média 12 est formé par deux voies V1, V2 redondantes, il est nécessaire de traiter les informations issues de chaque voie V1, V2, et de les synthétiser en un signal ACT (activité) et un signal COL (collision) représentatifs du média 12 global.

Sur les figures 3 et 4, les sorties des bascules B1 et B2 des circuits 46, 48 d'élaboration de l'état des deux voie V1, V2 sont connectées par des conducteurs 110a, 110b à l'entrée d'un circuit logique 50. L'entrée de ce dernier reçoit également les signaux élémentaires d'activité et de collision aV1, cV1; aV2, cV2, prélevés sur le bus auxiliaire 44. La sortie du circuit logique 50 délivre les signaux synthétiques ACT et COL appliqués au circuit de contrôle 38 par des conducteurs 112, 114 de raccordement.

Le tableau suivant regroupe la signification des différents signaux et états appliqués au circuit logique 50 :

| aV1 | signal activité voie V1 |
| aV2 | signal activité voie V2 |
| cV1 | signal collision voie V1 |
| cV2 | signal collision voie V2 |
| ACT | signal synthétique activité du média 12 |
| COL | signal synthétique collision du média 12 |
| V1 OK | état de la voie V1 correct (OK) |
| V1 $\overline{OK}$ | état de la voie V1 incorrect ($\overline{OK}$) |
| V2 OK | état de la voie V2 correct (OK) |
| V2 $\overline{OK}$ | état de la voie V2 incorrect ($\overline{OK}$) |

Signal ACT

Le circuit logique 50 est agencé pour délivrer un signal ACT défini par l'équation (1) logique suivante :

(1) $\boxed{\text{signal ACT} = aV1 \cdot V1\ OK + aV2 \cdot V2\ OK}$

c'est-à-dire "(activité voie V1) ET (voie V1 OK)" OU "(activité voie V2) ET (voie V2 OK)"

Lorsque les deux voies V1 et V2 sont dans l'état OK, il suffit que l'une des voies V1, V2 soit active pour que le média 12 soit considéré actif. Quand une seule des voies est dans l'état OK, c'est l'activité de cette voie qui est représentative de l'activité du média 12. Quand les voies V1, V2 se trouvent dans l'état $\overline{OK}$, il n'y a pas d'activité. L'équation logique (1) peut être élaborée par une logique câblée dont le circuit équivalent est représenté à la fig. 6. Les signaux aV1 et V1 OK sont appliqués à l'entrée d'une première porte ET 58, et les signaux aV2 et V2 OK sont appliqués à l'entrée d'une deuxième porte ET 60. Les deux portes ET 58, 60 pilotent une porte OU 62 dont la sortie délivre le signal ACT.

On remarque que si l'état d'une voie V1 ou V2 est $\overline{OK}$, le contrôle d'accès ne se préoccupe pas d'elle pour tester l'activité du média 12.

23                               0165185

Quand les deux voies V1, V2 sont simultanément dans un
état $\overline{OK}$, le coupleur CR1 se retire de la boucle logique,
et la notion d'activité n'a plus de sens.

Signal COL

Le signal COL du circuit logique 50 est le résultat de
l'équation (2) logique suivante :

(2) | signal COL = (cV1 + V1 $\overline{OK}$ .(cV2 + V2 $\overline{OK}$).(V1 OK + V2 OK)

c'est-à-dire "(collision voie V1)" OU "(Voie V1 $\overline{OK}$)"
                                ET
         "(collision voie V2)" OU "(voie V2 $\overline{OK}$)"
                                ET
         "(Voie V1 OK)"        OU "(voie V2 OK)"

représenté par le circuit logique équivalent de la fig. 7.
Les signaux V1 OK et V2 OK sont appliqués à une porte
logique OU 64.Une autre porte logique OU 66 reçoit le
signal cV2 sur l'une de ses entrées et le signal V2 OK sur
l'autre entrée inversée. L'une des entrées d'une troisième
porte logique OU 68 est pilotée par le signal cV1, tandis
que le signal V1 OK est appliqué à l'autre entrée inversée.
Les sorties des trois portes OU 64, 66, 68 sont reliées à
l'entrée d'un circuit logique ET 70 qui délivre à sa sortie
le signal COL.

Lorsque les deux voies V1, V2 sont dans un état OK, il faut que ces deux voies indiquent ensemble une collision pour que le contrôle de l'accès au média 12 considère qu'il y a duplication de jeton. Lorsqu'une seule des voies V1 ou V2 est OK, la collision sur cette voie implique une collision sur le média 12 global. Inversement si l'une des voies est $\overline{OK}$, le protocole détecte la collision d'après l'autre voie. Quand les deux voies V1, V2 sont dans l'état $\overline{OK}$, le protocole ne voit pas de collision.

On remarque que le contrôle d'accès ne se préoccupe pas des voies $\overline{OK}$ pour détecter les collisions sur le média 12. Ainsi si une voie est $\overline{OK}$ suite à une panne simulant une collision, la station bénéficie de la redondance active en pilotant le média grâce à l'autre voie.

En résumé, l'automate 42 de gestion de la redondance reçoit:

- les signaux élémentaires d'activité aV1, aV2 de la voie V1 et de la voie V2;

- les signaux élémentaires de collision cV1, cV2 de la voie V1 et de la voie V2;

- les signaux de validation du microprocesseur 20 correspondant à une bonne réception d'un paquet sur la voie V1 et sur la voie V2 (voir la transition t1),

puis élabore les signaux suivants indispensables au protocole de contrôle d'accès au média 12 :

- état de la voie V1 (OK ou $\overline{OK}$)

- état de la voie V2 (OK ou $\overline{OK}$)

- ACT et COL, qui sont la synthèse des états précédents et des divers signaux élémentaires d'activité et de collision des deux voies V1 et V2.

Les états de la voie V1 et de la voie V2, représentés par le niveau logique de la sortie de chaque bascule B1 et B2, et les divers signaux collision cV1, cV2 et d'activité aV1, aV2 du bus auxiliaire 44 sont communiqués au bus local 32 par un interface 74 (fig. 4).

## Circuit de contrôle 38

Sur la figure 8 est représenté le circuit de contrôle 38 piloté par les signaux de sortie COL et ACT du circuit logique 50. Le contrôleur d'interruptions programmable PIC est interconnecté par une liaison 75 avec le bus local 32 et est commandé directement par le signal collision COL du circuit logique 50. Les moyens de temporisation T du circuit 38 comportent une pluralité de compteurs 76, 78, 80 de temporisations différentes, reliés respectivement par les liaisons 82, 84, 86 avec le bus local 32, et pilotés individuellement par le signal activité ACT du circuit logique 50. Les sorties SS1, SS2, SS3 des trois compteurs 76, 78, 80 sont branchées au contrôleur d'interruptions PIC par des conducteurs ou liaisons 88, 90, 92.

Le premier compteur 76 dont la temporisation est dénommée "T perte" est utilisé pour détecter la perte du jeton JET. La totalité des stations S1 à Sn sont à l'écoute pour contrôler en permanence l'activité du média 12. Tout début d'activité engendre un signal ACT à la sortie du circuit logique 50 qui réarme le compteur 76 à sa valeur "T perte". La valeur de la temporisation "T perte" est identique pour tous les coupleurs CR1 à CRn des stations S1 à Sn. Après écoulement d'un temps supérieur à "T perte", sans activité sur le média 12, la sortie SS1 du compteur 76 applique un signal "perte de jeton" au contrôleur PIC, et le jeton JET est diagnostiqué comme perdu par toutes les stations. La totalité des coupleurs CR1 à CRn passent alors en phase de régénération du jeton avec une dispersion de l'ordre de tP correspondant au temps de propagation d'un paquet le long du média 12. Cette phase de régénération du

**0165185**

jeton est une compétition entre toutes les stations S1 à Sn. L'algorithme utilisé lors de cette compétition est le suivant : chaque coupleur CR1, CR2 ... CRn possède un paramètre prioritaire nommé NBTS(1), NBTS(2) ... NBTS(n), les paramètres successifs étant différents l'un de l'autre. Dès la détection de la perte du jeton, le microprocesseur 20 de chaque coupleur CR1 à CRn provoque par l'intermédiaire du bus 32 et de la liaison 84, le réarmement du deuxième compteur 78 de temps à sa valeur de temporisation, constituée par le produit du paramètre prioritaire du coupleur correspondant et d'une unité de temps TS. L'échelonnement de la temporisation du compteur 78 des coupleurs CR1 ... CRn successifs est représenté par le tableau suivant :

$$NBTS(1) . TS$$
$$NBTS(2) . TS$$
$$....$$
$$NBTS(n) . TS$$

A titre d'exemple, le compteur 78 du coupleur CR1 décompte tant que le média 12 est inactif (absence de signal ACT à la sortie du circuit logique 50), et jusqu'à l'expiration de la temporisation NBTS(1).TS. Dans ce dernier cas, la sortie SS2 du compteur 78 délivre un signal de commande au contrôleur PIC par l'intermédiaire du conducteur 90 pour le gain de l'algorithme de régénération. Le coupleur CR1 a gagné la compétition pour régénérer le jeton, et passe immédiatement en phase d'émission d'un paquet INF ou JET. L'activité engendrée sur le média 12 est détectée par le circuit logique 50 (signal ACT), ce qui interrompt automatiquement le décomptage du compteur 78 des autres coupleurs CR2 à CRn. Cet algorithme attribue une priorité à chaque coupleur CR1, CR2 ... CRn, et le jeton pourra être régénéré indépendamment du nombre de stations disponibles à cet instant. Afin d'éviter des diagnostics successifs de pertes de jeton, l'action du premier compteur 76 de surveillance de la perte du jeton doit être inhibée pendant le déroulement de l'algorithme de régénération lorsque la temporisation (NBTS.TS) du deuxième compteur 78 est supérieure à celle (T perte) du premier compteur 76.

Le troisième compteur 80 possède une temporisation TACK et est utilisé pour détecter l'accusé de réception implicite ARI du jeton. A titre d'exemple, les paquets INF et JET sont reçus par les coprocesseurs 30 des deux voies V1, V2 du coupleur CR2 et chaînés dans les mémoires tampons 26 de réception. A la fin de chaque réception, le microprocesseur 20 reçoit une interruption du contrôleur PIC et examine le champ type du paquet reçu pour distinguer le paquet JET du paquet INF. Le paquet INF est mis à la disposition de l'équipement EQ2 de la station S2. La bonne réception du paquet JET est par contre surveillée par le protocole mis en oeuvre dans le coupleur CR2. Quand ce dernier reçoit un paquet JET (1 → 2) du coupleur précédent CR1, il doit procéder à l'émission, soit d'un message d'informations INF vers une station prédéterminée, soit d'un message ou paquet de jeton JET (2 → 3) vers le coupleur CR3 suivant. Cette émission a lieu après un temps minimum dénommé "ISP" qui correspond au temps que va mettre le coupleur CR2 pour reconnaître le droit de parole et pour passer en émission, et avant un délai maximum qui correspond à la temporisation TACK du troisième compteur 80. Après avoie donné l'ordre d'émission du jeton JET (1 → 2), le coupleur CR1 écoute le média 12 et s'attend à y détecter une activité. Juste après l'émission, le microprocesseur 20 du coupleur CR1 envoie un signal de commande de réarmement du compteur 80 à la temporisation TACK par l'intermédiaire du bus 32 et de la liaison 86. Le décomptage de la temporisation TACK est automatiquement interrompu par la détection d'un signal ACT à la sortie du circuit logique 50. Par contre, à l'expiration du délai TACK en l'absence de signal ACT, la sortie SS3 du troisième compteur 80 signale au contrôleur PIC (par l'intermédiaire du conducteur 92) que le jeton n'a pas été acquitté. Le microprocesseur 20 du coupleur CR1 conclut que le paquet JET (1 → 2) a été perdu, et procède à une nouvelle émission du jeton JET (1 → 2) avec la même surveillance. Si ce paquet est de nouveau perdu, le coupleur CR1 diagnos-

tique l'indisponibilité de la station S2 et procède suivant le principe décrit en référence à la figure 2.

En présence d'un signal collision COL à la sortie du circuit logique 50, le contrôleur d'interruptions PIC programmable envoie instantanément une interruption au microprocesseur 20 qui passe sur le programme duplication de jeton. Toutes les stations impliquées dans cette collision doivent la détecter, et abandonnent ensuite le droit de parole. Le média 12 est alors inactif.

On remarque que le protocole d'accès au média par circulation de jeton décrit en référence à la figure 8, est indépendant de la nature du média 12, ce dernier pouvant être soit redondant à deux lignes L1 et L2, tel que décrit en référence aux figures 1 à 7, soit non redondant à ligne unique (non représenté). Dans ce dernier cas, l'automate 42 de gestion de la rédondance équipé des circuits 46, 48 et 50 est supprimé, ainsi que la voie V2 de communication et le bus auxiliaire 44. Les signaux synthétiques ACT et COL de commande du circuit de contrôle 38 sont remplacés par le signal collision cV1 et le signal activité aV1 prélevés directement sur les liaisons CL2 et CL1 entre le circuit de mise en forme 28 et le coprocesseur 30 de la voie V1. Le signal activité aV1 est alors utilisé pour l'accusé de réception implicite ARI du jeton, pour la détection de la perte du jeton, et pour l'algorithme de régénération du jeton. Le signal collision cV1 est utilisé pour détecter la duplication de jeton.

L'invention n'est bien entendu nullement limitée aux modes de mise en oeuvre plus particulièrement décrits et représentés aux dessins annexés, mais elle s'étend bien au contraire à toute variante restant dans le cadre des équivalences.

0165185

## REVENDICATIONS

1. Procédé de transmission et d'échange de messages entre plusieurs stations (S1 à Sn) interconnectées entre elles par un support commun de transmission ou média (12), et faisant partie d'un réseau local (10) de communication décentralisé, l'accès au média (12) étant partagé entre les différentes stations (S1 à Sn) ayant chacune une adresse propre, grâce à un protocole déterministe à circulation de jeton, géré par un coupleur (CR1 à CRn) de contrôle de communication agencé dans chaque station (S1 à Sn), le jeton étant constitué par un message ou paquet particulier (JET) représentant un droit de parole qui circule sur le réseau (10) suivant une table de configuration incluse en mémoire dans chaque coupleur (CR1 à CRn), la station détentrice du jeton étant la seule à pouvoir émettre un message ou paquet d'informations (INF) sur le média (12) avant de passer le jeton (JET) à la station suivante, chaque type de messages ou paquets (INF ou JET) contenant l'adresse de la station destinataire et l'adresse de la station source, caractérisé en ce qu'il consiste :
- à élaborer dans chaque coupleur (CR1 à CRn) un signal activité et un signal collision représentant l'état du média (12),
- à faire intervenir lesdits signaux activité et collision dans le protocole d'accès au média (12),
- à utiliser le signal collision pour détecter la duplication de jeton entraînant l'abandon du droit de parole des stations impliquées dans la collision,
- à utiliser le signal activité après l'écoulement de temps d'attente prédéterminés (TACK, T perte, NBTS.TS...), respectivement pour l'accusé de réception implicite (ARI) du jeton, pour la détection de la perte du jeton et pour l'algorithme de régénération du jeton.

2. Système pour la mise en oeuvre du procédé selon la revendication 1, chaque station (S1 à Sn) comprenant un coupleur (CR1 à CRn) de contrôle de communication et un équipement (EQ1 à EQn) utilisateur de traitement de l'information, un coupleur (CR1 à CRn) comportant au moins :

- une voie (V1, V2) de communication formée par le média (12) et un circuit de commande (CC1, CC2) comprenant un transcepteur (14, 16), un coprocesseur (30), une mémoire (26) ou buffer d'émission/réception, et un circuit de mise en forme (28) agencé entre le coprocesseur (30) et le transcepteur (14, 16),

- un système à microprocesseur (20) coopérant avec ladite voie (V1, V2) pour gérer le protocole d'accès au média (12),

- une mémoire (36) contenant une première table de configuration de la boucle logique du réseau (10),

- un circuit (40) d'entrée/sortie communiquant avec l'équipement (EQ1 ... EQn) utilisateur correspondant,

- et un dispositif de bus (24, 31, 32) de liaison, caractérisé en ce que chaque coupleur (CR1 à CRn) comprend de plus un circuit de contrôle (38) équipé d'un contrôleur d'interruptions programmable (PIC) coopérant avec le microprocesseur (20) correspondant, et de moyens de temporisation (T) formés par une pluralité de compteurs (76, 78, 80) de temporisations différentes, correspondant respectivement auxdits temps d'attente (T perte, NBTS.TS et TACK), le signal collision étant appliqué directement au contrôleur d'interruptions programmable (PIC), alors que le signal activité est délivré simultanément à chaque compteur (76, 78, 80) comprenant une première liaison (82, 84, 86) avec le microprocesseur (20), et une deuxième liaison (88, 90, 92) avec le contrôleur (PIC).

3. Système selon la revendication 2, caractérisé en ce que le premier compteur (76) est agencé pour être réarmé automatiquement à sa valeur "T perte" par le signal activité, lequel est engendré par le coupleur correspondant dès le début d'activité du média (12), et pour délivrer un signal de commande de perte de jeton au contrôleur d'interruptions (PIC) après l'expiration de la temporisation "T perte" sans activité sur le média (12), entraînant la perte de jeton pour la totalité des stations (S1 à Sn), et que la valeur de la temporisation "T perte" est identique pour tous les coupleurs (CR1 à CRn).

4. Système selon la revendication 3, caractérisé en ce que le deuxième compteur (78) est agencé pour être réarmé à sa valeur (NBTS.TS) par le microprocesseur (20) dès la détection de la perte de jeton, et pour envoyer au contrôleur d'interruptions (PIC) un signal de commande de gain de l'algorithme de régénération du jeton, après l'expiration de la temporisation (NBTS.TS) sans activité sur le média (12), et que ledit algorithme attribue une priorité à chaque coupleur (CR1 à CRn) grâce à un paramètre (NBTS) intervenant dans la valeur de la temporisation de chaque compteur (78), dans laquelle TS représente une unité de temps, tel que la phase de régénération du jeton constitue une compétition entre toutes les stations (S1 à Sn), le coupleur ayant gagné la compétition passant immédiatement en phase d'émission se traduisant par un signal activité qui interrompt automatiquement le décomptage du deuxième compteur (78) des autres coupleurs.

5. Système selon la revendication 2, 3 ou 4, caractérisé en ce que le troisième compteur (80) d'une station source ou d'émission est agencé pour être réarmé à sa valeur (TACK) par le microprocesseur (20) associé, après l'émission du jeton vers la station suivante de destination, le décomptage de la temporisation (TACK) étant automatiquement interrompu par la détection d'un signal activité à l'entrée du compteur (80) de la station source, et pour délivrer au contrôleur d'interruptions (PIC) un signal d'absence de réception de jeton après l'expiration de la temporisation (TACK) dudit compteur (80) sans activité sur le média (12).

6. Système selon la revendication 2, 3, 4 ou 5, caractérisé en ce que le média (12) est formé par un câble unique non redondant, et que le signal activité (aV1) et le signal collision (cV1) représentant l'état du média (12) sont élaborés dans le circuit de mise en forme (28) de la voie de communication (V1).

32                                                              0165185

7. Système selon l'une des revendications 2 à 5, dans lequel le média (12) est formé par un câble redondant, notamment à deux lignes (L1, L2), caractérisé en ce que le microprocesseur (20) de chaque coupleur (CR1 à CRn) coopère avec deux voies (V1, V2) de communication pour gérer le protocole d'accès au média (12), et que la redondance active est surveillée en permanence par un automate (42) de gestion associé à chaque coupleur (CR1 à CRn), ledit automate comprenant :

- un premier circuit (46) d'élaboration de l'état logique (V1 OK ou V1 $\overline{OK}$) de la voie (V1),
- un deuxième circuit (48) d'élaboration de l'état logique (V2 OK ou V2 $\overline{OK}$) de la voie (V2),
- et un circuit (50) de synthèse des états précédents (V1 OK, V1 $\overline{OK}$; V2 OK, V2 $\overline{OK}$) et des signaux élémentaires d'activité (aV1, aV2) et de collision (cV1, cV2) des deux voies (V1, V2), la sortie du circuit (50) étant susceptible d'envoyer au circuit de contrôle (38) un signal synthétique activité (ACT) et un signal synthétique collision (COL) représentatif du média (12) global.

8. Système selon la revendication 7, caractérisé en ce que le circuit de synthèse (50) est formé par un circuit logique agencé pour délivrer un signal activité (ACT) défini par une première équation logique (aV1.V1 OK + aV2.V2 OK), et un signal collision (COL) défini par une deuxième équation logique (cV1 + V1 $\overline{OK}$).(cV2 + V2 $\overline{OK}$).(V1 OK + V2 OK).

9. Système selon la revendication 7 ou 8, caractérisé en ce que chaque circuit (46, 48) d'élaboration de l'état des voies (V1 et V2) comporte une bascule (B1, B2) bistable à deux entrées (SET et RESET) et à une sortie (Q) reliée à l'entrée du circuit (50) de synthèse par un conducteur (110a, 110b), l'entrée (SET) étant connectée par un interface (52) à un bus local (32) communiquant avec le microprocesseur (20) lors de la transition (t1), et l'entrée (RESET) pouvant recevoir un signal de commande en provenance soit de l'interface (52) (transition d'état t2), soit d'un compteur (54a, 54b) de temporisation (T3) (transition d'état t3), soit d'un compteur (55a, 55b) de temporisation (T4) (transition d'état t4), et que la première transition (t1) provoque le passage de l'état de la voie (V1, V2) correspondante de $\overline{OK}$ à OK, alors que les trois autres transitions (t2, t3, t4) sur l'entrée (RESET) de la bascule (B1, B2) assurent la commutation inverse de l'état de la voie (V1, V2) de OK à $\overline{OK}$, les transitions d'état (t1, t2, t3, t4) précitées étant définies de la manière suivante :

- transition (t1) : un message (INF ou JET) reçu correctement positionne la sortie (Q) de chaque bascule (B1, B2) dans l'état (OK),

- transition (t2) : lorsque l'une (V1) des voies n'a pas de reçu et ne peut plus recevoir un message (INF ou JET) que l'autre voie (V2) a reçu, l'état de la bascule (B1) passe à ($\overline{OK}$),

- transition (t3) : l'état d'une voie (V1 ou V2), qui ne reçoit pas de messages pendant une période plus longue que la temporisation (T3) du compteur (54a, 54b) correspondant est considéré $\overline{OK}$,

- transition (t4) : l'état d'une voie (V1 ou V2) active pendant une période plus longue que la temporisation (T4) du compteur (55a, 55b) correspondant, passe à $\overline{OK}$.

10. Système selon la revendication 9, comprenant deux voies (V1, V2) pseudo-synchrones, caractérisé en ce que l'automate (42) tient à jour une deuxième table contenue dans la mémoire (36) pour la reproduction des dernières réceptions de messages (INF ou JET) sur les deux voies (V1, V2), et que le microprocesseur (20) coopère avec la mémoire (36) par l'intermédiaire du bus processeur (24) et du bus local (32) pour vérifier l'identité de chaque nouveau message reçu sur chaque voie (V1, V2), l'une des bascules (B1, B2) étant automatiquement positionnée dans l'état ($\overline{OK}$) par le microprocesseur (20) en cas de non concordance desdites réceptions.

11. Système selon la revendication 9 ou 10, caractérisé en

ce que le compteur (54a, 54b) de chaque circuit (46, 48) d'élaboration de l'état des voies (V1, V2) est en liaison avec le bus local (32) et est agencé pour être réarmé à la valeur (T3) par un signal de commande délivré par le micro-processeur (20) à chaque bonne réception de message sur la voie (V1, V2) correspondante, et pour envoyer un signal à l'entrée (RESET) de la bascule (B1, B2) associée, lors de l'expiration de la temporisation (T3) sans nouvelle récep-tion de message, la valeur (T3) étant ajustable et au plus égale à deux temps de circulation du jeton.

12. Système selon la revendication 9, 10 ou 11, caractérisé en ce que le compteur (55a, 55b) de chaque circuit (46, 48) d'élaboration de l'état des voies (V1, V2) est piloté par les signaux élémentaires d'activité (aV1, aV2) et est agencé pour être réarmé à la valeur (T4) en cas de disparition du signal activité (aV1, aV2), et pour décompter en cas de reprise d'activité sur la voie (V1, V2), l'expiration de la temporisation (T4) du compteur (55a, 55b) correspondant provoquant l'émission d'un signal de commande à l'entrée (RESET) de la bascule (B1, B2) dont l'état commute à $\overline{OK}$.

Fig . 1

→ JET (jeton)
---→ ARI (accusé de réception
       implicite du jeton)
⇒ INF (message d'information)

Fig . 2

0165185

Fig. 3

Fig. 4

0165185

Fig . 5

Fig . 6

Fig . 7

0165185

Fig. 8

BUS LOCAL

PIC

COMPTEUR T perte

COMPTEUR NBTS x TS

COMPTEUR TACK

## DOCUMENTS CONSIDERES COMME PERTINENTS

| Catégorie | Citation du document avec indication. en cas de besoin. des parties pertinentes | Revendication concernée | CLASSEMENT DE LA DEMANDE (Int. Cl 4) |
|---|---|---|---|
| X | EP-A-0 076 401 (HUGHES AIRCRAFT COMP.) <br> * Page 17, lignes 14-33; page 21, ligne 5 - page 22, ligne 7 * | 1 | H 04 L 11/16 |
| A | | 2-6 | |
| A | EP-A-0 033 228 (FORNEY) <br><br> * Page 4, ligne 12 - page 5, ligne 2; page 23, ligne 20 - page 31, ligne 9 * | 1-5,7, 10 | |
| A | ELECTRONICS INTERNATIONAL, vol. 55, no. 18, septembre 1982, pages 158-163, New York, US; J.A. MURPHY: "Token-passing protocol boosts throughput in local networks" <br> * Page 161, colonne de droite, ligne 28 - page 162, colonne de gauche, ligne 23 * | 1-6 | |

DOMAINES TECHNIQUES RECHERCHES (Int. Cl 4)

H 04 L
G 06 F

Le présent rapport de recherche a été établi pour toutes les revendications

| Lieu de la recherche | Date d'achèvement de la recherche | Examinateur |
|---|---|---|
| LA HAYE | 03-09-1985 | MIKKELSEN C. |